# EUROPÄISCHE PATENTSCHRIFT

(11) **EP 3 697 641 B1**
(45) Veröffentlichungstag und Bekanntmachung des Hinweises auf die Patenterteilung: **06.12.2023**
(21) Anmeldenummer: 18785510.1
(22) Anmeldetag: 08.10.2018
(51) Int. Cl.: B60L 53/31, B60L 53/34

(54) **SYSTEM UND VERFAHREN ZUR ENERGIEÜBERTRAGUNG AN EIN ALS FAHRZEUG AUSGEFÜHRTES MOBILTEIL MIT ENERGIESPEICHER UND SEKUNDÄRWICKLUNG**
SYSTEM AND METHOD FOR TRANSMITTING ENERGY TO A MOBILE PART CONFIGURED AS A VEHICLE, COMPRISING AN ENERGY STORE AND A SECONDARY WINDING
SYSTÈME ET PROCÉDÉ DE TRANSMISSION D'ÉNERGIE VERS UNE UNITÉ MOBILE CONFIGURÉ EN TANT QUE VÉHICULE ET AYANT UN ACCUMULATEUR D'ÉNERGIE ET UN ENROULEMENT SECONDAIRE

(30) Priorität: 18.10.2017 DE 102017009676
(43) Veröffentlichungstag der Anmeldung: 26.08.2020
(73) Patentinhaber: SEW-EURODRIVE GmbH & Co. KG, 76646 Bruchsal (DE)
(72) Erfinder: SIMON, Olaf, 76646 Bruchsal - Untergrombach (DE); BÖCKLE, Jürgen, 76646 Bruchsal (DE); SCHILLING, Rainer, 76703 Kraichtal (DE); MAHLEIN, Jochen, 76139 Karlsruhe (DE)
(86) Internationale Anmeldenummer: PCT/EP2018/025261
(87) Internationale Veröffentlichungsnummer: WO 2019/076483

(56) Entgegenhaltungen:
- EP-A1- 2 774 800
- EP-A1- 2 983 267
- DE-A1-102010 022 727
- US-A1- 2016 264 007
- Samsung Deutschland: "Samsung Galaxy S7 / S7 edge: Induktive Schnellladestation", Youtube, 14. April 2016 (2016-04-14), Seite 1, XP054979019, Gefunden im Internet: URL:https://www.youtube.com/watch?v=fua_3N RjUNQ [gefunden am 2019-01-15]

## Beschreibung

Die Erfindung betrifft ein ein System nach Anspruch 1, umfassend, neben den anderen Merkmalen des Anspruchs 1 **ein Ladegerät, einen ersten Steckadapter und einen zweiten Steckadapter sowie ein Mobilteil,**
**wobei das System zur Energieübertragung an das Mobilteil geeignet ausgebildet ist,**
**wobei das Mobilteil mit Energiespeicher und Sekundärwicklung ausgebildet ist.**

Des Weiteren betrifft die Erfindung ein Verfahren nach Anspruch 14.

Es ist allgemein bekannt, dass einem Elektrofahrzeug konduktiv mittels eines Kabels und Steckverbinders aus dem Wechselspannungsversorgungsnetz Energie zuführbar ist, insbesondere zur Beladung eines Energiespeichers.

Ebenso ist allgemein bekannt, Energie über eine induktive Kopplung zu übertragen.

**Aus der XP054979019 ist ein Ladegerät für ein mobiles Kommunikationsgerät bekannt.**

**Aus der** EP 2 983 267 A1 **ist eine induktive Energieversorgung für ein Automobil bekannt.**

**Aus der** DE 10 2010 022 727 A1 **ist ein Ladesystem zum Laden einer Traktionsbatterie eines Fahrzeugs bekannt.**

**Aus der** US 2016 / 264 007 A1 **ist ein kabelloses Ladesystem zur Beladung eines Energiespeichers eines Fahrzeugs bekannt.**

**Aus der** DE 10 2015 204 070 B3 **ist ein Energieübertragungsverbinder bekannt.**

**Aus der** DE 10 2016 203 172 A1 **ist eine Vorrichtung zum Laden eines elektrischen Energiespeichers bekannt.**

**Aus der** DE 10 2014 223 931 A1 **ist eine Ladestation für ein batteriebetriebenes Fahrzeug bekannt.**

**Aus der** DE 20 2011 110 435 U1 **ist eine induktive Einspeisevorrichtung für Elektrofahrzeuge bekannt.**

**Aus der** DE 20 2014 000 328 U1 **ist ein Ladesystem zum Laden eines Energiespeichers eines Elektrofahrzeugs bekannt.**

**Aus der** DE 10 2014 222 475 A1 **ist ein Übertragungssystem bekannt.**

**Aus der** DE 10 2013 200 102 A1 **ist eine Ladestation mit Notbetriebsart bekannt.**

**Aus der** DE 10 2011 003 543 A1 **ist eine Ladevorrichtung für einen elektrischen Energiespeicher in einem Kraftfahrzeug bekannt.**

**Aus der** DE 10 2013 220 704 A1 **ist eine doppelte Nutzung eines Umrichters zur konduktiven und induktiven Ladung eines Elektrofahrzeugs bekannt.**

**Aus der** DE 10 2014 207 719 A1 **ist eine skalierbare induktive Ladestation bekannt.**

**Aus der** EP 2 774 800 A1 **ist als nächstliegender Stand der Technik ein**

**Leistungsempfänger- und Ladesystem bekannt, bei dem eine kabelgebundene und eine kabellose Beladung ermöglicht ist.**

Der Erfindung liegt daher die Aufgabe zugrunde, ein wahlweise induktiv und konduktiv beladbares Elektrofahrzeug mit möglichst geringer Anzahl an Bauteilen auszuführen.

Erfindungsgemäß wird die Aufgabe durch die Merkmale der anhängenden unabhängigen Ansprüche gelöst.

Von Vorteil ist dabei, dass das Ladegerät die Beladung bei beiden Ladearten gleichartig regelt. Außerdem ist das Ladegerät als Umrichter ausführbar und daher die Steuerelektronik des Umrichters mit einem Regler zum geregelten Beladen des Energiespeichers ausstattbar. Wichtige Merkmale der Erfindung bei dem System sind, dass das System zur Energieübertragung an ein Mobilteil mit Energiespeicher und Sekundärwicklung vorgesehen ist,
wobei das System ein Ladegerät aufweist,
wobei das Ladegerät entweder mit einem ersten Steckadapter steckverbindbar ist zur konduktiven Energieübertragung ans Mobilteil oder zur induktiven Energieübertragung ans Mobilteil mit einem zweiten Steckadapter steckverbindbar ist, insbesondere entweder in einen ersten Steckadapter oder in einen zweiten Steckadapter einsteckbar ist,
wobei der erste Steckadapter im oder am Mobilteil angeordnet ist,
wobei der zweite Steckadapter stationär, außerhalb des Mobilteils, angeordnet ist.

Von Vorteil ist dabei, dass nur ein einziges Ladegerät für beide Betriebsarten notwendig ist, also fürs konduktive und fürs induktive Übertragen von Energie. Hierzu wird aber das Ladegerät beim konduktiven Übertragen am Mobilteil und beim induktiven Übertragen stationär, also separat vom Mobilteil, angeordnet. In beiden Betriebsarten arbeitet das Ladegerät als Stellglied zur Steuerung der in den Energiespeicher eingebrachten elektrischen Leistung. Somit wird die Beladung geregelt vom Ladegerät. Hierzu werden die erfassten Ladespannungswerte an das Ladegerät übermittelt.

Bei einer vorteilhaften Ausgestaltung ist ein erster Gleichrichter zwischen dem ersten Steckadapter und dem Energiespeicher zwischengeordnet,
wobei ein zweiter Gleichrichter zwischen der Sekundärwicklung und dem Energiespeicher zwischengeordnet ist,
insbesondere also der gleichspannungsseitige Anschluss des ersten und des zweiten Gleichrichters parallel geschaltet sind mit dem Anschluss des Energiespeichers und der wechselspannungsseitige Anschluss des ersten Gleichrichters mit dem ersten Steckadapter und der wechselspannungsseitige Anschluss des zweiten Gleichrichters mit der Sekundärwicklung verbunden ist. Von Vorteil ist dabei, dass dem Energiespeicher in beiden Betriebsarten ein Energiefluss über einen Gleichrichter zuführbar ist.

Bei einer vorteilhaften Ausgestaltung ist eine Primärwicklung stationär, insbesondere am Boden, angeordnet und elektrisch mit dem zweiten Steckadapter verbunden, insbesondere wobei die Sekundärwicklung an der Unterseite des Mobilteils angeordnet ist. Von Vorteil ist dabei, dass das Ladegerät die Primärwicklung bei der induktiven Betriebsart versorgt und die Energie induktiv ans Mobilteils übertragbar ist.

Erfindungsgemäß ist bei dem mit dem zweiten Steckadapter steckverbundenen Ladegerät dieses aus einem Wechselspannungsversorgungsnetz versorgt und prägt einen Wechselstrom in die Primärwicklung ein, wobei die in der Sekundärwicklung induzierte und vom, insbesondere zweiten, Gleichrichter gleichgerichtete Spannung am Energiespeicher anliegt. Von Vorteil ist dabei, dass die Bestromung der Primärwicklung mittels des Ladegeräts erfolgt und somit die Ladespannungsregelung oder die Ladestromregelung primärseitig ausgeführt wird. Hingegen wird beim konduktiven Betreiben die Regelung im Mobilteil ausgeführt, also nicht stationär. Wichtig ist dabei, dass das Mobilteil während der Beladung hin- oder herbewegbar angeordnet ist, wobei die Bewegungsfreiheit durch ein Kabel begrenzt ist.

Bei einer vorteilhaften Ausgestaltung wird am Energiespeicher die Ladespannung und/oder der Ladestrom erfasst und der dabei erfasste Wert wird über einen Datenübertragungskanal dem Ladegerät zugeführt. Von Vorteil ist dabei, dass das Ladegerät die Regelung der Beladung des Energiespeichers ausführt. Somit muss kein direkt vor den Energiespeicher geschaltetes Gerät die Laderegelung betreiben.

Bei einer vorteilhaften Ausgestaltung weist das Ladegerät eine Regeleinheit auf, welche eine vom Ladegerät bereit gestellte Wechselspannung oder einen vom Ladegerät bereit gestellten Wechselstrom derart stellt, dass der erfasste Wert auf einen Sollwert hin geregelt wird. Von Vorteil ist dabei, dass die Regelung von der Signalelektronik eines Umrichters, welcher im Ladegerät angeordnet ist, ausführbar ist. Somit ist keine weitere Leistungselektronik außerhalb des Ladegeräts notwendig, sondern die aktive Elektronik ist im Ladegerät anordenbar. Darüberhinausgehend ist nur eine Erfassung der Ladespannung oder des Ladestroms am Energiespeicher notwendig und die Mittel zur Realisierung eines Datenübertragungskanals zwischen dieser Erfassung und dem Ladegerät.

Erfindungsgemäß ist bei dem mit dem ersten Steckadapter steckverbundenen Ladegerät dieses aus dem oder einem Wechselspannungsversorgungsnetz versorgt und der vom Ladegerät bereit gestellte Wechselstrom wird vom ersten Gleichrichter gleichgerichtet und dem Energiespeicher eingeprägt. Von Vorteil ist dabei, dass die Beladung und Laderegelung in einfacher Weise ausführbar ist.

Bei einer vorteilhaften Ausgestaltung weist der erste und der zweite Gleichrichter passiv ausgeführt sind, insbesondere aus passiven elektronischen Bauelementen. Von Vorteil ist dabei, dass keine Ansteuerung aktiver Bauelemente notwendig ist innerhalb der Gleichrichter.

Erfindungsgemäß weist das Ladegerät einen Frequenzumrichter auf, wobei bevorzugt dessen Signalelektronik die Reglereinheit aufweist,
wobei der Frequenzumrichter Signalelektronik in einem Gehäuse des Ladegeräts angeordnet sein kann.

Von Vorteil ist dabei, dass die Leistungselektronik nur im Ladegerät notwendig ist und nicht in einer weiteren Einheit, insbesondere nicht direkt vor dem Energiespeicher.

Bei einer vorteilhaften Ausgestaltung ist der wechselspannungsseitige Anschluss eines Gleichrichters über einen Umschalter wahlweise mit dem ersten Steckadapter oder mit der Sekundärwicklung verbunden. Von Vorteil ist dabei, dass nur ein einziger Gleichrichter notwendig ist.

Bei einer vorteilhaften Ausgestaltung ist der Sekundärwicklung eine Kapazität parallel und/oder in Reihe zugeschaltet, welche derart dimensioniert ist, dass die Resonanzfrequenz des aus der Kapazität und der Sekundärwicklung gebildeten Schwingkreises der Frequenz des vom Ladegerät bereit gestellten Wechselstromes oder der Frequenz der vom Ladegerät bereit gestellten Wechselspannung gleicht. Von Vorteil ist dabei, dass ein hoher Wirkungsgrad auch bei unterschiedlichen Positionen des Mobilteils erreichbar ist. Denn durch die resonante Übertragung schwankt der Wirkungsgrad auch bei schwankender induktiver Kopplungsstärke nur geringfügig.

Bei einer vorteilhaften Ausgestaltung wird die ausgangsseitig am Umrichter des Ladegeräts bereit gestellte Wechselspannung einem als Gyrator ausgeführten Vierpol des Ladegeräts zugeführt, wobei die Bauteile, wie Induktivität und Kapazität, des Vierpols resonant abgestimmt sind auf die Frequenz der Wechselspannung. Von Vorteil ist dabei, dass aus dem spannungsquellenartigen Verhalten am wechselspannungsseitigen Anschluss des Umrichters ein stromquellenartiges Verhalten am Ausgangs des Gyrators bewirkbar ist. Somit ist ein Strom einprägbar in die Primärwicklung.

Erfindungsgemäß ist das Steckverbinderteil des Ladegeräts steckverbindbar mit entweder dem ersten Steckadapter als Gegensteckverbinderteil oder dem zweiten Steckadapter als Gegensteckverbinderteil. Von Vorteil ist dabei, dass das Ladegerät steckverbindbar ist mit beiden Steckadaptern.

Weitere Vorteile ergeben sich aus den Unteransprüchen. Die Erfindung bzw. deren Schutzumfang ist durch die anhängenden Ansprüche definiert.

Die Erfindung wird nun anhand von schematischen Abbildungen näher erläutert:
In der Figur 1 ist ein erstes System dargestellt, welches ein auf einem Boden verfahrbar angeordnetes Mobilteil aufweist, das konduktiv über ein Kabel und induktiv über eine am Boden angeordnete Primärwicklung beladbar ist.
In der Figur 2 ist ein erfindungsgemäßes Ausführungsbeispiel gezeigt, wobei ein Mobilteil 24 induktiv beladen wird.
In der Figur 3 ist die konduktive Beladung des Mobilteils 24 gezeigt.
In der Figur 4 ist ein Mobilteil zur Verwendung in einem System gemäß der Erfindung gezeigt, das nur einen einzigen Gleichrichter 40 aufweist.

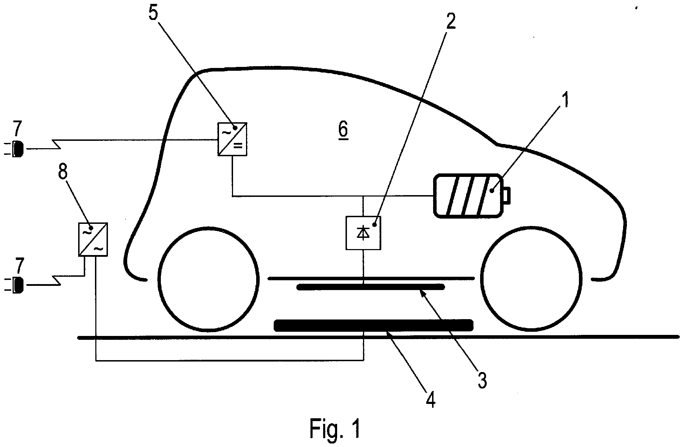

Wie in Figur 1 gezeigt, ist das Mobilteil 6 auf einem Boden verfahrbar angeordnet und weist an seiner Unterseite eine Sekundärwicklung 3 auf, die mit einer am Boden angeordneten, also stationär angeordneten, Primärwicklung 4 induktiv koppelbar ist, so dass eine induktive Übertragung von Energie ermöglicht ist.

Dabei wird die Primärwicklung 4 von einem Ladegerät 8 mit einem Wechselstrom beaufschlagt, das von einem Wechselspannungsversorgungsnetz, insbesondere dem Öffentlichen Netz, versorgt ist.

Das Ladegerät 8 weist einen Umrichter auf, der einen als Gyrator ausgeführten Vierpol aufweist, wobei die Bauteile des Gyrators, wie Kondensator, Induktivität und dergleichen, derart dimensioniert sind, dass der Gyrator auf die Frequenz des Wechselstroms resonant abgestimmt ist. Der Gyrator wandelt das spannungsquellenartige Verhalten des wechselspannungsseitigen Anschlusses des Umrichters in ein stromquellenartiges Verhalten an der Ausgangsseite des Gyrators um. Somit wird ein Wechselstrom in die Primärwicklung 4 eingeprägt, dessen Stärke von der am wechselspannnungsseitigen Anschluss des Umrichters bereit gestellten Spannung bestimmt wird.

Die Sekundärwicklung 3 ist mit einem Gleichrichter 2 verbunden, dessen Ausgangsstrom einem Energiespeicher 1 des Mobilteils 6 zugeführt wird. Somit ist ein induktives Beladen des Energiespeichers 1 ausführbar. Die Regelung des Ladestroms erfolgt wegen der passiven Ausführung des Gleichrichters 2 mittels des Umrichters, also mit einer im Ladegerät 8 angeordneten Reglereinheit. Der Regeleinheit wird die am Energiespeicher 1 erfasste Spannung zugeführt, so dass die am wechselspannungsseitigen Ausgang des Umrichters bereit gestellte Spannung derart gestellt wird, dass der Ladestrom auf einen Sollwert hin geregelt wird, welcher der jeweiligen am Energiespeicher 1 anliegenden Spannung zugeordnet ist, insbesondere per Kennlinie.

Außerdem weist das Mobilteil 6 ein weiteres Ladegerät 5 auf, welchem vom Wechselspannungsversorgungsnetz Energie zuführbar ist und welches ausgangsseitig eine Gleichspannung zur Verfügung stellt, welche als Ladespannung für den Energiespeicher 1 fungiert. Somit regelt das weitere Ladegerät diesen Gleichspannungswert auf einen Sollwert an Ladespannung hin oder stellt den Gleichspannungswert derart ein, dass der Ladestrom auf einen Sollwert hin geregelt wird, welcher der jeweiligen am Energiespeicher 1 anliegenden Spannung zugeordnet ist, insbesondere per Kennlinie.

Somit ist zwar wahlweise ein konduktives oder induktives Beladen des Energiespeichers 1 ermöglicht, allerdings ist ein stationär angeordnetes Ladegerät 8 und ein am Mobilteil 6 angeordnetes Ladegerät 5 notwendig.

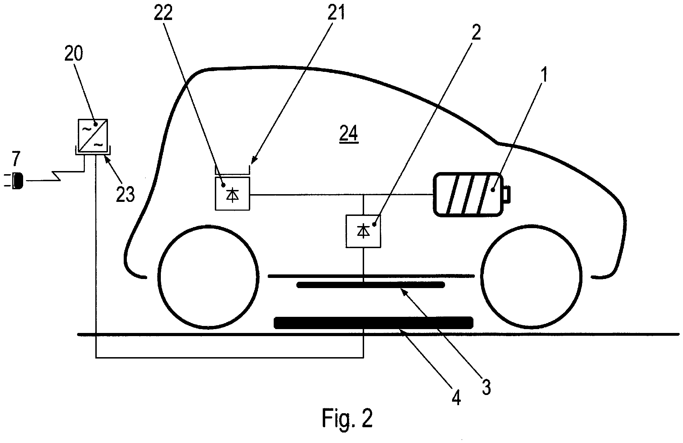

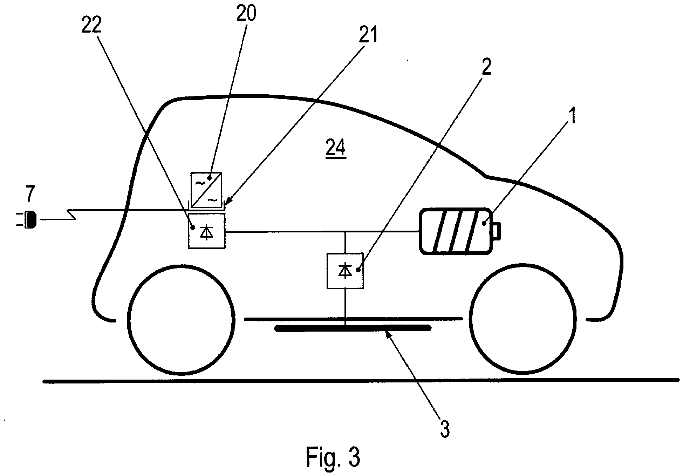

Wie in Figur 2 und 3 gezeigt, ist erfindungsgemäß ein einziges Ladegerät 20 sowohl beim konduktiven als auch beim induktiven Beladen des Energiespeichers 1 einsetzbar. Hierzu wird das Ladegerät 20 als entnehmbare Einheit ausgeführt. Somit weist das Ladegerät 20 ein eigenes Gehäuse auf und ein Steckverbinderteil.

Mit diesem Steckverbinderteil ist das Ladegerät mit einem stationär angeordneten zweiten Steckadapter 23 steckverbindbar.

Mittels des Steckadapters 23 wird einerseits dem Ladegerät die Wechselspannung des Wechselspannungsversorgungsnetzes zugeführt, so dass das Ladegerät 20 mit Energie versorgt wird. Andererseits wird der von der Ausgangsseite des Ladegeräts 20 bereit gestellte Ladestrom, insbesondere Wechselstrom, der Primärwicklung 4 zugeführt, so dass ein induktives Beladen ermöglicht ist, wobei das Ladegerät 20 dabei außerhalb des Mobilteils 24 angeordnet ist. Die Regelung der Ladespannung oder des Ladestroms wird dabei wiederum vom Ladegerät 20 ausgeführt, wobei hierzu die am Energiespeicher 1, insbesondere also am Mobilteil 24, erfassten Werte der Ladespannung und/oder des Ladestroms dem Ladegerät 20 übermittelt werden. Hierzu werden die Daten entweder per Funkwellen oder höher frequenter, sekundärseitig aufmodulierter Wechselstromanteile übertragen. Die in der Sekundärwicklung 3 induzierte Spannung wird über einen Gleichrichter 2 dem Energiespeicher 1 zugeführt. Der Gleichrichter 2 ist passiv ausgeführt. Somit ist die Regelung der Ladespannung oder des Ladestroms nur vom Ladegerät 20 selbst bewirkbar.

Das Ladegerät 20 ist alternativ mit einem am Mobilteil 24 angeordneten ersten Steckadapter 21 steckverbindbar. Somit wird dann beim konduktiven Beladen das Ladegerät 20 aus dem Wechselspannungsversorgungsnetz mit Wechselspannung versorgt, insbesondere also mit elektrischer Energie versorgt, und stellt ausgangsseitig eine Wechselspannung bereit, die über einen Gleichrichter 22, der ebenfalls passiv ausgeführt ist, dem Energiespeicher 1 zugeführt wird. Somit wird die Regelung des Ladestroms oder der Ladespannung vom Ladegerät 20 ausgeführt, indem das Ladegerät eine entsprechende Wechselspannung ausgangsseitig bereitstellt. Bei Stromregelungsbetrieb wird die bereit gestellte Spannung derart gestellt, dass der Ladestrom auf einen Sollwert hin geregelt wird, bei Spannungsregelungsbetrieb wird die Wechselspannung derart bereitgestellt, dass die Ladespannung auf den entsprechenden Sollwert hingeregelt wird.

Das Ladegerät 20 ist also sowohl beim konduktiven als auch beim induktiven Betrieb als Umrichter betrieben, insbesondere mit gleichartigem Regelbetrieb. Denn die eingangsseitig zugeführte Wechselspannung wird vom Ladegerät 20 verwendet, um eine Wechselspannung vorzugsweise anderer Frequenz bereit zu stellen. Die bereit gestellte Wechselspannung weist vorzugsweise eine Frequenz zwischen 10 und 1000 kHz auf. Das Wechselspannungsversorgungsnetz weist vorzugsweise eine Frequenz von weniger als 100Hz, insbesondere 50 Hz oder 60 Hz, auf.

Wesentlicher Unterschied zwischen konduktiver und induktiver Ladeart besteht im Wesentlichen nur in der induktiven Koppelung bei induktiver Ladeart. Das Ladegerät 20 kann aber in der gleichen Weise betrieben werden, ist also unabhängig von der Ladeart gleichartig verwendbar.

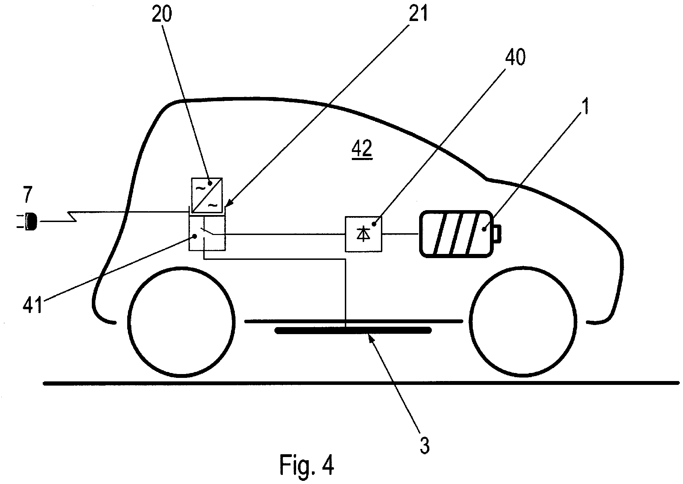

Wie in Figur 4 gezeigt, ist im Unterschied zur Figur 2 und 3 sogar nur ein einziger Gleichrichter 40 verwendbar, wenn ein Umschalter 41 vorgeordnet wird. Somit ist dem Gleichrichter 40 abhängig von der Schalterstellung des Umschalters 41 entweder die von dem Ladegerät 20 beim konduktiven Laden bereit gestellte Wechselspannung oder die in der Sekundärwicklung 3 induzierte Wechselspannung zuführbar. Das Mobilteil 42 ist somit einfacher und kostengünstiger herstellbar.

### Bezugszeichenliste

1 Energiespeicher, insbesondere Batterie
2 Gleichrichter
3 Sekundärwicklung
4 Primärwicklung
5 konduktives Ladegerät
6 Mobilteil, insbesondere Fahrzeug
7 Wechselspannungsversorgungsnetz
8 induktives Ladegerät
20 Ladegerät, insbesondere bifunktionales Ladegerät
21 erster Steckadapter, insbesondere Gegensteckverbinderteil
22 Gleichrichter, passiv
23 zweiter Steckadapter, insbesondere Gegensteckverbinderteil
24 Mobilteil
40 Gleichrichter
41 Umschalter
42 Mobilteil

## Patentansprüche

1. **System, umfassend ein** Ladegerät (20), **einen ersten Steckadapter** (21) **und einen zweiten Steckadapter** (23), eine Primärwicklung (4) **sowie ein** als Fahrzeug ausgeführtes Mobilteil (24, 42),
**wobei das System zur Energieübertragung an das Mobilteil geeignet ausgebildet ist,**
**wobei das Mobilteil mit Energiespeicher und Sekundärwicklung ausgebildet ist,**
**wobei das Ladegerät entweder mit dem ersten Steckadapter steckverbindbar ist zur konduktiven Energieübertragung ans Mobilteil oder zur induktiven Energieübertragung ans Mobilteil mit dem zweiten Steckadapter steckverbindbar ist, insbesondere entweder in den ersten Steckadapter oder in den zweiten Steckadapter einsteckbar ist,**
**wobei der erste Steckadapter im oder am Mobilteil angeordnet ist,**
**wobei der zweite Steckadapter** stationär und außerhalb des Mobilteils **angeordnet** und elektrisch mit der Primärwicklung verbunden ist,
**wobei das Ladegerät für ein als ein Fahrzeug ausgeführtes Mobilteil mit Energiespeicher** (1) **und Sekundärwicklung vorgesehen ist,**
wobei das Ladegerät einen Frequenzumrichter aufweist,
wobei der Frequenzumrichter eingangsseitig einen Wechselspannungsanschluss und ausgangsseitig einen Wechselspannungsanschluss aufweist, der den ausgangsseitigen Wechselspannungsanschluss des Ladegerätes speist,
wobei
- **das Ladegerät** so **eingerichtet ist, dass** bei konduktiver, insbesondere kabelgebundener, Ladeart das Ladegerät an dem ersten, im oder am Mobilteil angeordneten Steckadapter eingesteckt ist und eingangsseitig an eine Wechselspannungsquelle mittels eines ersten Steckers, insbesondere Steckadapters, angeschlossen wird,
wobei vom ausgangsseitigen Wechselspannungsanschluss **des Ladegeräts** über einen Gleichrichter **des Mobilteils** der Energiespeicher beladen wird,
- und dass **das Ladegerät** weiterhin so **eingerichtet ist, dass** bei induktiver Ladeart das Ladegerät von dem ersten, im oder am Mobilteil angeordneten Steckadapter abgesteckt ist und an den zweiten, elektrisch mit der Primärspule verbundenen Steckadapter angesteckt ist, **wobei**
- vom ausgangsseitigen Wechselspannungsanschluss **des Ladegeräts** die Primärspule gespeist wird, welche mit der Sekundärwicklung des Mobilteils induktiv gekoppelt angeordnet ist, wobei die Sekundärwicklung über einen Gleichrichter **des Mobilteils** den Energiespeicher belädt.

2. System nach Anspruch 1,
**dadurch gekennzeichnet, dass**
ein erster Gleichrichter: (2, 22) zwischen dem ersten Steckadapter (21) und dem Energiespeicher (1) zwischengeordnet ist,
wobei ein zweiter Gleichrichter zwischen der Sekundärwicklung (3) und dem Energiespeicher zwischengeordnet ist,
insbesondere also die jeweiligen gleichspannungsseitigen Anschlüsse des ersten und des zweiten Gleichrichters (2, 22) parallel geschaltet sind mit dem Anschluss des Energiespeichers und der wechselspannungsseitige Anschluss des ersten Gleichrichters mit dem ersten Steckadapter (21) und der wechselspannungsseitige Anschluss des zweiten Gleichrichters mit der Sekundärwicklung verbunden ist.

3. System nach mindestens einem der vorangegangenen Ansprüche,
**dadurch gekennzeichnet, dass**
die (4) stationär und Boden, angeordnet ist, insbesondere wobei die Sekundärwicklung an der Unterseite des Mobilteils angeordnet ist.

4. System nach mindestens einem der vorangegangenen Ansprüche,
**dadurch gekennzeichnet, dass**
bei dem mit dem zweiten Steckadapter (23) steckverbundenen Ladegerät (20) dieses aus einem Wechselspannungsversorgungsnetz versorgt ist und einen Wechselstrom in die Primärwicklung (4) einprägt,
insbesondere wobei die in der Sekundärwicklung (3) induzierte und vom zweiten Gleichrichter gleichgerichtete Spannung am Energiespeicher anliegt.

5. System nach mindestens einem der vorangegangenen Ansprüche,
**dadurch gekennzeichnet, dass**
am Energiespeicher (1) die Ladespannung und/oder der Ladestrom erfasst wird und der dabei erfasste Wert über einen Datenübertragungskanal dem Ladegerät zugeführt werden.

6. System nach mindestens einem der vorangegangenen Ansprüche,
**dadurch gekennzeichnet, dass**
das Ladegerät (20) eine Regeleinheit aufweist, welche eine vom Ladegerät bereit gestellte Wechselspannung oder einen vom Ladegerät bereit gestellten Wechselstrom derart stellt, dass der erfasste Wert auf einen Sollwert hin geregelt wird.

7. System nach mindestens einem der vorangegangenen Ansprüche,
**dadurch gekennzeichnet, dass**
bei dem mit dem ersten Steckadapter (21) steckverbundenen Ladegerät (20) dieses aus dem oder einem Wechselspannungsversorgungsnetz versorgt ist und der vom Ladegerät bereit gestellte Wechselstrom vom ersten Gleichrichter gleichgerichtet wird und dem Enegiespeicher (1) einprägt.

8. System nach mindestens einem der vorangegangenen Ansprüche,
**dadurch gekennzeichnet, dass**
der erste und der zweite Gleichrichter (22) passiv ausgeführt ist, insbesondere aus passiven elektronischen Bauelementen ausgeführt ist.

9. System nach mindestens einem der vorangegangenen Ansprüche,
**dadurch gekennzeichnet, dass**
die Signalelektronik des Frequenzumrichters des Ladegerätes (20) die Reglereinheit aufweist, wobi der Frequenzumrichter samt Signalelektronik in einem Gehäuse des Ladegeräts (20) angeordnet ist.

10. System nach mindestens einem der vorangegangenen Ansprüche,
**dadurch gekennzeichnet, dass**
der wechselspannungsseitige Anschluss eines Gleichrichters (40) über einen Umschalter (41) wahlweise mit dem ersten Steckadapter oder mit der Sekundärwicklung verbunden ist.

11. System nach mindestens einem der vorangegangenen Ansprüche,
**dadurch gekennzeichnet, dass**
der Sekundärwicklung (3) eine Kapazität parallel und/oder in Reihe zugeschaltet ist, welche derart dimensioniert ist, dass die Resonanzfrequenz des aus der Kapazität und der Sekundärwicklung gebildeten Schwingkreises der Frequenz des vom Ladegerät bereit gestellten Wechselstromes oder der Frequenz der vom Ladegerät bereit gestellten Wechselspannung gleicht.

12. System nach mindestens einem der vorangegangenen Ansprüche,
**dadurch gekennzeichnet, dass**
die ausgangsseitig am Frequenzumrichter des Ladegeräts bereit gestellte Wechselspannung einem als Gyrator ausgeführten Vierpol des Ladegeräts (20) zugeführt wird, wobei die Bauteile, wie Induktivität und Kapazität, des Vierpols resonant abgestimmt sind auf die Frequenz der Wechselspannung.

13. System nach mindestens einem der vorangegangenen Ansprüche,
**dadurch gekennzeichnet, dass**
das Steckverbinderteil des Ladegeräts steckverbindbar ist mit entweder dem ersten Steckadapter (21) als Gegensteckverbinderteil oder dem zweiten Steckadapter (23) als Gegensteckverbinderteil.

14. Verfahren zum Beladen des Energiespeichers (1) eines Mobilteils (24, 42) mit einem Ladegerät (20),
wobei das Mobilteil **als Fahrzeug ausgeführt ist und** eine Sekundärwicklung (3) aufweist,
wobei das Ladegerät einen Frequenzumrichter aufweist,
wobei der Frequenzumrichter eingangsseitig einen Wechselspannungsanschluss und ausgangsseitig einen Wechselspannungsanschluss aufweist, der den ausgangsseitigen Wechselspannungsanschluss des Ladegerätes (20) speist,
wobei wahlweise entweder eine induktive oder eine konduktive Ladeart ausgeführt wird, wobei
- bei konduktiver, insbesondere kabelgebundener, Ladeart das Ladegerät an einem ersten Steckadapter (21), der am Mobilteil (24, 42) angeordnet ist, ins Mobilteil einsteckt wird und eingangsseitig an eine Wechselspannungsquelle mittels eines ersten Steckers, insbesondere Steckadapters, angeschlossen wird, wobei vom ausgangsseitigen Wechselspannungsanschluss **des Ladegeräts** (20) über einen Gleichrichter der Energiespeicher (1) beladen wird,
- und dass bei induktiver Ladeart das Ladegerät von dem Steckplatz des Mobilteils abgesteckt wird und an eine Primärwicklung (4) angesteckt wird, wobei das Ladegerät eingangsseitig von einer Wechselspannungsquelle versorgt wird, **wobei** vom ausgangsseitigen Wechselspannungsanschluss **des Ladegeräts** die Primärwicklung (4) gespeist wird, welche mit der Sekundärwicklung (3) des Mobilteils induktiv gekoppelt angeordnet wird, wobei der Energiespeicher (1) aus der Sekundärwicklung über einen Gleichrichter beladen wird.

## Claims

1. System comprising a charger (20), a first plug adapter (21), a second plug adapter (23), a primary winding (4) and a mobile component (24, 42) configured as a vehicle, wherein the system is configured to be suitable for transmitting energy to the mobile component,
wherein the mobile component is configured having an energy storage device and a secondary winding,
wherein the charger either can be plug-connected to the first plug adapter for transmitting energy to the mobile component conductively or can be plug-connected to the second plug adapter for transmitting energy to the mobile component inductively, in particular can be inserted either into the first plug adapter or into the second plug adapter,
wherein the first plug adapter is arranged in or on the mobile component,
wherein the second plug adapter is arranged in a stationary manner and outside the mobile component and is electrically connected to the primary winding,
wherein the charger is intended for a mobile component that is configured as a vehicle and which comprises an energy storage device (1) and a secondary winding,
wherein the charger has a frequency converter,
wherein the frequency converter has an AC voltage terminal at the input and an AC voltage terminal at the output, which feeds the output-side AC voltage terminal of the charger, wherein
- the charger is configured such that when in the conductive, in particular wired, charging mode, the charger is inserted at the first plug adapter arranged in or on the mobile component and is connected at the input to an AC voltage source by means of a first connector, in particular plug adapter, wherein the energy storage device is charged by the output-side AC voltage terminal of the charger by means of a rectifier of the mobile component,
- and the charger is furthermore configured such that when in the inductive charging mode, the charger is unplugged from the first plug adapter arranged in or on the mobile component and is plugged in at the second plug adapter, which is electrically connected to the primary coil, wherein the primary coil, which is arranged so as to be inductively coupled to the secondary winding of the mobile component, is fed by the output-side AC voltage terminal of the charger, wherein the secondary winding charges the energy storage device by means of a rectifier of the mobile component.

2. System according to claim 1,
**characterised in that**
a first rectifier (2, 22) is interposed between the first plug adapter (21) and the energy storage device (1),
a second rectifier being interposed between the secondary winding (3) and the energy storage device,
the respective DC voltage-side terminals of the first and the second rectifier (2, 22) in particular therefore being wired in parallel with the terminal of the energy storage device, and the AC voltage-side terminal of the first rectifier being connected to the first plug adapter (21) and the AC voltage-side terminal of the second rectifier being connected to the secondary winding.

3. System according to at least one of the preceding claims,
**characterised in that**
the primary winding (4) is arranged in a stationary manner and on the floor, the secondary winding in particular being arranged on the underside of the mobile component.

4. System according to at least one of the preceding claims,
**characterised in that**
in the case of the charger (20) that is plug-connected to the second plug adapter (23), said charger is powered from an AC voltage supply grid and impresses an alternating current on the primary winding (4), the voltage induced in the secondary winding (3) and rectified by the second rectifier in particular being applied to the energy storage device.

5. System according to at least one of the preceding claims,
**characterised in that**
the charging voltage and/or the charging current is detected at the energy storage device (1), and the value detected in the process is supplied to the charger by means of a data transmission channel.

6. System according to at least one of the preceding claims,
**characterised in that**
the charger (20) has a control unit which adjusts either an AC voltage provided by the charger or an alternating current provided by the charger in such a way that the detected value is controlled towards a setpoint.

7. System according to at least one of the preceding claims,
**characterised in that**
in the case of the charger (20) that is plug-connected to the first plug adapter (21), said charger is powered from the or an AC voltage supply grid, and the alternating current provided by the charger is rectified by the first rectifier and impressed on the energy storage device (1).

8. System according to at least one of the preceding claims,
**characterised in that**
the first and the second rectifier (22) are configured to be passive, in particular are configured out of passive electronic elements.

9. System according to at least one of the preceding claims,
**characterised in that**
the signal electronics of the frequency converter of the charger (20) comprise the controller unit, the frequency converter being arranged in a housing of the charger (20) together with the signal electronics.

10. System according to at least one of the preceding claims,
**characterised in that**
the AC voltage-side terminal of a rectifier (40) is connected to either the first plug adapter or the secondary winding by means of a changeover switch (41).

11. System according to at least one of the preceding claims,
**characterised in that**
a capacitor is wired in parallel and/or in series with the secondary winding (3) and is dimensioned such that the resonant frequency of the resonant circuit formed from the capacitor and the secondary winding is equal to the frequency of the alternating current provided by the charger or to the frequency of the AC voltage provided by the charger.

12. System according to at least one of the preceding claims,
**characterised in that**
the AC voltage provided on the output side at the frequency converter of the charger is supplied to a quadripole of the charger (20), which quadripole is configured as a gyrator, the components of the quadripole, such as the inductor and capacitor, being adapted to the frequency of the AC voltage in a resonant manner.

13. System according to at least one of the preceding claims,
**characterised in that**
the plug-in connector part of the charger can be plug-connected to either the first plug adapter (21) as the mating plug-in connector part or the second plug adapter (23) as the mating plug-in connector part.

14. Method for charging the energy storage device (1) of a mobile component (24, 42) using a charger (20),
wherein the mobile component is configured as a vehicle and has a secondary winding (3),
wherein the charger has a frequency converter,
wherein the frequency converter has an AC voltage terminal at the input and an AC voltage terminal at the output, which feeds the output-side AC voltage terminal of the charger (20),
wherein either an inductive or a conductive charging mode is executed, wherein
- in the conductive, in particular wired, charging mode, the charger is inserted into the mobile component at a first plug adapter (21) arranged on the mobile component (24, 42) and is connected at the input to an AC voltage source by means of a first connector, in particular plug adapter, wherein the energy storage device (1) is charged by the output-side AC voltage terminal of the charger (20) by means of a rectifier,
- and in the inductive charging mode, the charger is unplugged from the plugging site of the mobile component and is plugged into a primary winding (4), wherein the charger is powered on the input side by an AC voltage source, wherein the primary winding (4), which is arranged so as to be inductively coupled to the secondary winding (3) of the mobile component, is fed by the output-side AC voltage terminal of the charger, wherein the energy storage device (1) is charged from the secondary winding by means of a rectifier.

## Revendications

1. Système comprenant un chargeur (20), un premier adaptateur enfichable (21) et un second adaptateur enfichable (23), un enroulement primaire (4), ainsi qu'une partie mobile (24, 42) réalisée sous la forme d'un véhicule,
ledit système étant adéquatement conçu pour transférer de l'énergie à ladite partie mobile, laquelle partie mobile est équipée d'un accumulateur d'énergie et d'un enroulement secondaire,
ledit chargeur pouvant être connecté par enfichage au premier adaptateur enfichable, en vue du transfert d'énergie par conduction à la partie mobile, ou bien connecté par enfichage au second adaptateur enfichable, en vue du transfert d'énergie par induction à ladite partie mobile,
et pouvant notamment être enfiché soit dans ledit premier adaptateur enfichable, soit dans ledit second adaptateur enfichable,
le premier adaptateur enfichable étant disposé dans, ou sur la partie mobile,
le second adaptateur enfichable étant implanté de manière fixe, à l'extérieur de ladite partie mobile, et étant raccordé électriquement à l'enroulement primaire,
sachant que le chargeur est prévu pour une partie mobile réalisée sous la forme d'un véhicule comportant un accumulateur d'énergie (1) et un enroulement secondaire,
ledit chargeur étant doté d'un convertisseur de fréquence,
lequel convertisseur de fréquence est pourvu, côté entrée, d'une connexion de tension alternative et, côté sortie, d'une connexion de tension alternative qui alimente la connexion de tension alternative située côté sortie du chargeur,
sachant que
- le chargeur est agencé de telle sorte qu'en présence d'un mode de mise en charge conductif, notamment tributaire d'un câblage, ledit chargeur soit enfiché sur le premier adaptateur enfichable disposé dans, ou sur la partie mobile et soit raccordé à une source de tension alternative, côté entrée, au moyen d'une première fiche, d'un adaptateur enfichable en particulier,
l'accumulateur d'énergie étant chargé, par l'intermédiaire d'un redresseur de la partie mobile, à partir de la connexion de tension alternative du chargeur située côté sortie,
- et sachant que
le chargeur est, par ailleurs, agencé de telle sorte qu'en présence d'un mode de mise en charge inductif, ledit chargeur soit déboîté d'avec ledit premier adaptateur enfichable disposé dans, ou sur la partie mobile, et soit enfiché sur le second adaptateur enfichable raccordé électriquement à la bobine primaire, auquel cas
ladite bobine primaire, agencée pour être couplée par induction à l'enroulement secondaire de la partie mobile, est alimentée à partir de la connexion de tension alternative du chargeur située côté sortie, sachant que ledit enroulement secondaire charge l'accumulateur d'énergie par l'intermédiaire d'un redresseur de la partie mobile.

2. Système selon la revendication 1,
**caractérisé par le fait**
**qu'**un premier redresseur (2, 22) est interposé entre le premier adaptateur enfichable (21) et l'accumulateur d'énergie (1),
un second redresseur étant interposé entre l'enroulement secondaire (3) et ledit accumulateur d'énergie,
c'est-à-dire, en particulier, que les connexions respectives des premier et second redresseurs (2, 22), situées côté tension continue, sont branchées en parallèle avec la connexion de l'accumulateur d'énergie (1),
la connexion du premier redresseur, située côté tension alternative, étant raccordée au premier adaptateur enfichable (21)
et la connexion du second redresseur, située côté tension alternative, étant raccordée à l'enroulement secondaire.

3. Système selon au moins l'une des revendications précédentes,
**caractérisé par le fait que**
l'enroulement primaire (4) est implanté au sol, et de manière fixe,
sachant notamment que l'enroulement secondaire est implanté à la face inférieure de la partie mobile.

4. Système selon au moins l'une des revendications précédentes,
**caractérisé par le fait que**,
dans le cas du chargeur (20) connecté par enfichage au second adaptateur enfichable (23), ledit chargeur est alimenté à partir d'un réseau d'alimentation en tension alternative et injecte un courant alternatif dans l'enroulement primaire (4),
sachant notamment que la tension, induite dans l'enroulement secondaire (3) et redressée par le second redresseur, est appliquée à l'accumulateur d'énergie.

5. Système selon au moins l'une des revendications précédentes,
**caractérisé par le fait que**
la tension de charge et/ou le courant de charge est (sont) détecté(e)(s) sur l'accumulateur d'énergie (1) et la valeur, qui est alors détectée, est délivrée au chargeur par l'intermédiaire d'un canal de transmission de données.

6. Système selon au moins l'une des revendications précédentes,
**caractérisé par le fait que**
le chargeur (20) est muni d'une unité de régulation qui instaure une tension alternative fournie par ledit chargeur, ou un courant alternatif fourni par ledit chargeur, de façon telle que la valeur détectée soit régulée sur une valeur de consigne.

7. Système selon au moins l'une des revendications précédentes,
**caractérisé par le fait que**,
dans le cas du chargeur (20) connecté par enfichage au premier adaptateur enfichable (21), ledit chargeur est alimenté à partir du, ou d'un réseau d'alimentation en tension alternative, et le courant alternatif fourni par ledit chargeur est redressé par le premier redresseur et est injecté dans l'accumulateur d'énergie (1).

8. Système selon au moins l'une des revendications précédentes,
**caractérisé par le fait que**
les premier et second redresseurs (22) sont de réalisation passive et sont constitués, en particulier de composants électroniques passifs.

9. Système selon au moins l'une des revendications précédentes,
**caractérisé par le fait que**
l'électronique de signaux du convertisseur de fréquence du chargeur (20) est pourvue de l'unité de régulation, ledit convertisseur de fréquence étant logé dans un boîtier dudit chargeur (20) conjointement à ladite électronique de signaux.

10. Système selon au moins l'une des revendications précédentes,
**caractérisé par le fait que**
la connexion d'un redresseur (40) située côté tension alternative est sélectivement raccordée, par l'intermédiaire d'un commutateur (41), au premier adaptateur enfichable ou à l'enroulement secondaire.

11. Système selon au moins l'une des revendications précédentes,
**caractérisé par le fait**
**qu'**un condensateur, intégré en parallèle et/ou en série dans le circuit de l'enroulement secondaire (3), est dimensionné de façon telle que la fréquence de résonance du circuit oscillant, formé par ledit condensateur et par ledit enroulement secondaire, soit égale à la fréquence du courant alternatif fourni par le chargeur, ou à la fréquence de la tension alternative fournie par ledit chargeur.

12. Système selon au moins l'une des revendications précédentes,
**caractérisé par le fait que**
la tension alternative, fournie côté sortie du convertisseur de fréquence du chargeur, est délivrée à un quadripôle dudit chargeur (20), réalisé sous la forme d'un gyrateur, sachant que les composants, tels que l'inductance et le condensateur dudit quadripôle, sont coordonnés en résonance avec la fréquence de ladite tension alternative.

13. Système selon au moins l'une des revendications précédentes,
**caractérisé par le fait que**
la pièce de connexion enfichable du chargeur peut être connectée, par enfichage, soit au premier adaptateur enfichable (21) matérialisant une pièce de connexion enfichable complémentaire, soit au second adaptateur enfichable (23) matérialisant une pièce de connexion enfichable complémentaire.

14. Procédé de mise en charge de l'accumulateur d'énergie (1) d'une partie mobile (24, 42) comportant un chargeur (20),
laquelle partie mobile est réalisée sous la forme d'un véhicule et est munie d'un enroulement secondaire (3),
ledit chargeur étant doté d'un convertisseur de fréquence,
lequel convertisseur de fréquence est pourvu, côté entrée, d'une connexion de tension alternative et, côté sortie, d'une connexion de tension alternative qui alimente la connexion de tension alternative située côté sortie du chargeur (20),
un mode de mise en charge par induction, ou par conduction, pouvant être sélectivement exécuté, sachant
- qu'en présence d'un mode de mise en charge conductif, notamment tributaire d'un câblage, le chargeur est enfiché dans la partie mobile sur un premier adaptateur enfichable (21) disposé sur ladite partie mobile (24, 42) et est raccordé à une source de tension alternative, côté entrée, au moyen d'une première fiche, d'un adaptateur enfichable en particulier,
l'accumulateur d'énergie (1) étant chargé par l'intermédiaire d'un redresseur, à partir de la connexion de tension alternative du chargeur (20) située côté sortie,
- et sachant
qu'en présence d'un mode de mise en charge inductif, le chargeur est déboîté d'avec la zone d'enfichage de la partie mobile et est enfiché sur un enroulement primaire (4),
ledit chargeur étant alimenté par une source de tension alternative, côté entrée,
sachant que ledit enroulement primaire (4), alimenté à partir de la connexion de tension alternative située côté sortie dudit chargeur, est agencé pour être couplé, par induction, à l'enroulement secondaire (3) de ladite partie mobile, l'accumulateur d'énergie (1) étant chargé à partir dudit enroulement secondaire, par l'intermédiaire d'un redresseur.
